# EUROPEAN PATENT SPECIFICATION

(11) **EP 0 593 449 B1**
(45) Date of publication and mention of the grant of the patent: **21.08.1996**
(21) Application number: 91900959.7
(22) Date of filing: 27.11.1990
(51) Int. Cl.: B29C 70/02

(54) **PLASTIC PIPE WITH A WALL MADE UP OF A PLASTIC-FILLER LAYER**
KUNSTSTOFFROHR MIT EINER WAND BESTEHEND AUS EINER KUNSTSTOFFFÜLLSCHICHT
TUYAU EN PLASTIQUE POSSEDANT UNE PAROI CONSTITUEE D'UNE COUCHE DE CHARGE PLASTIQUE

(30) Priority: 29.11.1989 NL 8902950
(43) Date of publication of application: 27.04.1994
(73) Proprietor: WAVIN B.V., NL-8011 CW Zwolle (NL)
(72) Inventor: VAN DER PLOEG, Frederik, NL-7721 HR Dalfsen (NL)
(74) Representative: van der Veken, Johannes Adriaan
(86) International application number: NL9000176
(87) International publication number: WO9108101

(56) References cited:
- EP-A- 0 011 436
- EP-A- 0 291 639
- EP-A- 0 297 801
- WO-A-85/05593
- FR-A- 1 452 533
- FR-A- 1 497 527
- FR-A- 2 114 550
- US-A- 3 714 312
- US-A- 4 044 188
- Patent Abstracts of Japan, vol. 6, no. 161 (M-151)(1039), 24 August 1982; & JP-A-5775837 (AISHIN KAKOU K.K.) 12 May 1982 see the abstract

## Description

The invention relates to a plastic pipe comprising a wall of a plastic-filler layer having a filler content and being covered at least on one side by a fibre-reinforced plastic layer, in which the plastic of the filler layer and of the fibre-reinforced layer consists of a thermoplastic.

A plastic pipe of this type containing a low filler content (i.e. around 1%) is known from EP-A-0 291 639.

The drawback of this pipe is its high cost price as the low amount of filler will not substantially change the high cost of plastic material compared with the cost price of the much cheaper filler materials. Moreover, it is not possible to use scrap and waste material in this pipe.

The aim of the invention is now to provide a plastic pipe of the abovementioned type which does not present these disadvantages.

This aim is achieved according to the invention in that the plastic-filler layer consists to at least 60 to 95 % by weight of filler, preferably inorganic filler.

Due to the high amount of filler material the cost price of a plastic pipe of the invention will be very low.

It is also very surprising that a pipe having such a high filler content comprised between 60 and 95% still presents excellent strength properties.

By using a thermoplastic as binder for the filler and as material for forming the covering layer, a pipe can be formed which can easily be joined to another pipe by welding together. Moreover, a pipe of this type can easily be produced by, for example, extruding, casting or rolling a sheet from the thermoplastic containing filler particles and bending over this sheet, after partial cooling, and welding the longitudinal edges together to form a pipe-shaped body which is then wound with plastic tape.

Advantageously the plastic of the plastic-filler layer consists of a polyolefin in particular polypropylene.

Polypropylene has the great advantage that, because of its favourable melting characteristics, this polymer becomes a fluid of very low viscosity and thus can be mixed well with filler, as a result of which the resulting mass can then easily be extruded to a pipe or can be extruded, cast or rolled into sheets.

Preferably, a polypropylene copolymer is used, which has a better impact strength than polypropylene homopolymer, while the filler advantageously consists of sand because of the price and availability. The plastic-filler layer preferably consists to 75-90 percent by weight of filler. Plastic pipes according to the invention can be joined in ways customary for thermoplastic pipes; in particular, weld connections are possible.

The fibre reinforcement expediently extends in the longitudinal direction of the plastic tape, preferably continuously, which plastic tape is preferably wound substantially tangentially.

As a result, a high resistance is obtained to the internal pressure of media transported through the pipe.

The amount of tangentially wound plastic tape essentially determines the said resistance to internal pressure.

The plastic pipes according to the invention can be used both for line systems under atmospheric pressure and for pressurised line systems.

In the case of lines under atmospheric pressure, winding of the plastic-filler layer with a fibre-reinforced plastic tape offers a better mechanical strength during, for example, transport and laying than a pipe consisting of a plastic-filler layer alone, although the latter could be adequate in respect of the rigidity. In the case of pressure lines for low pressures, for example 6 or 10 bar, the combination of plastic-filler layer and fibre-reinforced layer gives the desired rigidity when under atmospheric pressure, although here the fibre-reinforced layer on its own would be adequate for the resistance to internal pressure.

The characteristics of seven different pipes are compared with one another in the appended table A.

The reference material here was a conventional PVC pipe with an external diameter of 315 mm and a wall thickness of 7.7 mm which can be used both for pressure lines under 6.3 bar and for sewer lines with an STIS of 4000 N/m². It is found that a polypropylene (PP) pipe must be appreciably thicker for a similar pressure category. A PP pipe would also be thicker for a similar rigidity. An FRPP (glass fibre reinforced polypropylene) pipe for 6 bar has a completely inadequate rigidity with an STIS of 49 N/mm², while a TPC pipe (sand with polypropylene) cannot withstand internal pressure. The combination of a polypropylene/sand pipe with a glass fibre-reinforced polypropylene covering, on the outside or inside and outside, does give the desired results.

The following material characteristics of the various materials used in the plastic pipe according to the invention were used for calculation of the characteristics of said plastic pipes, PP denoting polypropylene and PVC polyvinyl chloride.

**TABLE B**

| Characteristics of a few materials | | | | | |
|---|---|---|---|---|---|
| | sand | PP | PVC | sand/PP 80/20 | PP/glass tape |
| Modulus of elasticity (kN/mm²) | 73 | 1.0 | 3.0 | 1.70 | 25.0 |
| Elongation at break (%) | -- | 500 | 50 | 2.5 | 4 |
| Tensile strength (N/mm²) | -- | 30 | 50 | 3 | 400 |
| Permissible wall stress (N/mm²) | -- | 50 | 12.5 | -- | 100 |

It is pointed out that plastic compositions consisting of fillers held together by thermoplastics are known per se, which can be used for forming pipes. However, in the case of these pipes no reinforcements are applied to the inside and/or outside by winding with a fibre-reinforced plastic tape, so that they cannot be used effectively in practice.

The invention will now be illustrated with reference to an illustrative embodiment by means of the drawing, in which:
- Fig. 1 -: shows a plastic pipe according to the invention in longitudinal section;
- Fig. 2 -: a longitudinal section of a variant of a plastic pipe according to Fig. 1;
- Fig. 3 -: a longitudinal section of a second variant of a plastic pipe according to Fig. 1;
- Fig. 4 -: a longitudinal section of a plastic pipe according to the invention, in which the pipe core is formed by winding, and;
- Fig. 5 -: a side view of a variant of a pipe according to Fig. 4.

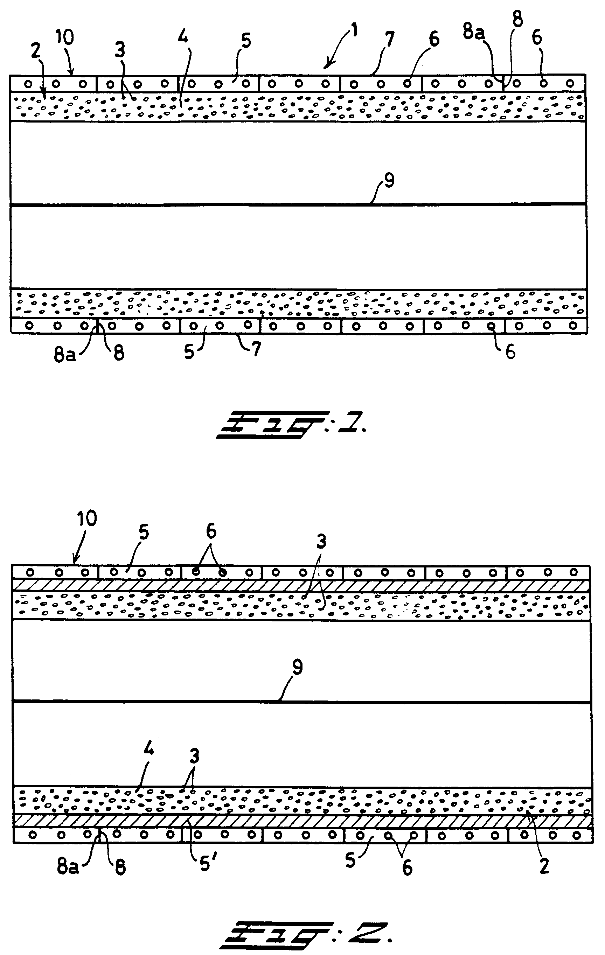

In Fig. 1 a plastic pipe 1 is shown which consists of a pipe-shaped core 2 formed by sand particles 3 held together by a polypropylene copolymer 4. The pipe-shaped core 2 is formed by bending over a sheet extruded, for example at 200°C, from an intimate mixture of sand particles and polypropylene and welding it tight along its edges with the formation of a weld seam 9 running in the longitudinal direction.

The core layer contains approximately 80% sand particles and 20 % by weight polypropylene copolymer.

An outer layer 10 of fibre-reinforced polypropylene plastic tape 5 with a glass fibre reinforcement 6 with continuous glass fibres extending in the longitudinal direction of the tape is wound around the core 2 in the tangential direction. The outer layer is therefore formed by tangential windings of the fibre-reinforced plastic tape 5, the windings 7 being mutually tightly joined by welding the edges 8, 8a together.

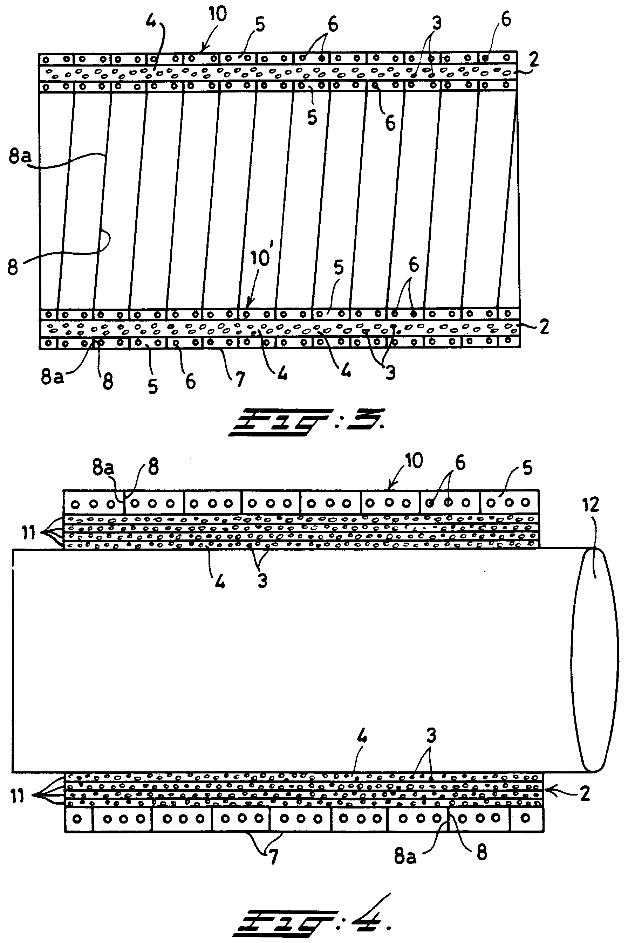

In Fig. 2 a modified embodiment is shown which essentially corresponds to that in Fig. 1 but in which the core 2 of sand particles with polypropylene copolymer 4 is first surrounded by a plastic tape 5' with a glass fibre reinforcement extending in the axial direction of the pipe. The tangentially wound layer 5 is then applied around this.

In this way the strength characteristics of the plastic pipe according to the invention, and its resistance to internal pressures and external loads, can be improved.

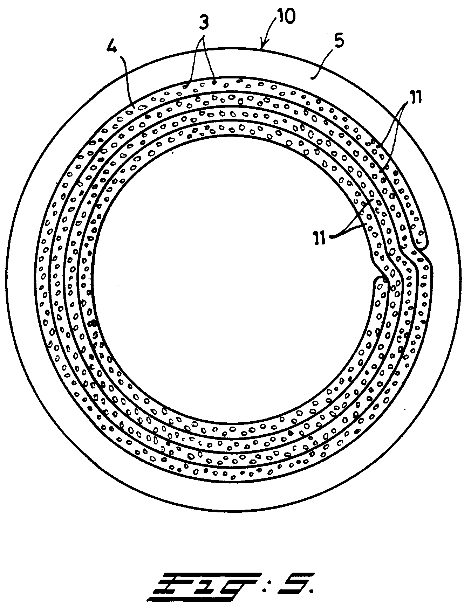

Another embodiment is shown in Fig. 3; in this embodiment there is also an inner layer 10' of glass fibre-reinforced polypropylene on the inside of the core 2 containing sand particles 3 and polypropylene copolymer 4. In this embodiment, the core layer 2 is applied by extrusion in pipe form around the wound inner layer 10'. The core layer 2 is, in its turn, again surrounded by an outermost winding layer 10 of glass fibre-reinforced polypropylene tape 5. In this embodiment also, an axial reinforcement from inside and/or outside is also possible, as a result of which axial forces also can be better absorbed, as can be necessary in pressure lines with welded joins, inter alia where the line changes direction.

The customary sand particles have a size of 0.2 to 2 mm. The pipe diameters can vary from about 100 mm to 1000 mm; the core layer then has a thickness of 2-25 mm and the outer layer a thickness of 0.3-3 mm.

It will be clear that the thermoplastic used in the core 2 and the inner layer and outer layer 10', 10 can be different.

Instead of an extruded sheet of an intimate mixture of sand particles 3 and polypropylene copolymer 4, it is also possible to use a cast sheet as starting material, the casting then taking place at about 200°C, i.e. a temperature at which the thermoplastic is molten.

Bending over the sheet to form the core 2 expediently takes place at a temperature at which the thermoplastic has softened, for example 160°C for a polypropylene copolymer.

Fig. 4 shows yet another embodiment of the core 2, which is produced by winding a thin web 11 of sand particles 3 and polypropylene copolymer 4. This thin web is formed by extruding or casting or another known technique, at a temperature of 200°C.

After cooling to 160°C, the flexible layer is wound on a mandrel 12 until a layered core 2 of the desired thickness is obtained, after which polypropylene tape 5 is wound round this, forming the outermost winding layer 10. The tape 5 may also consist of a polypropylene copolymer.

If the thin web 11 is sufficiently self-supporting, the core 2 can also be wound without the use of a mandrel 12.

The layers of the thin web 11 can also adhere easily to one another at a suitable temperature during winding, in which case a non-layered core 2 is formed as shown in Fig. 5.

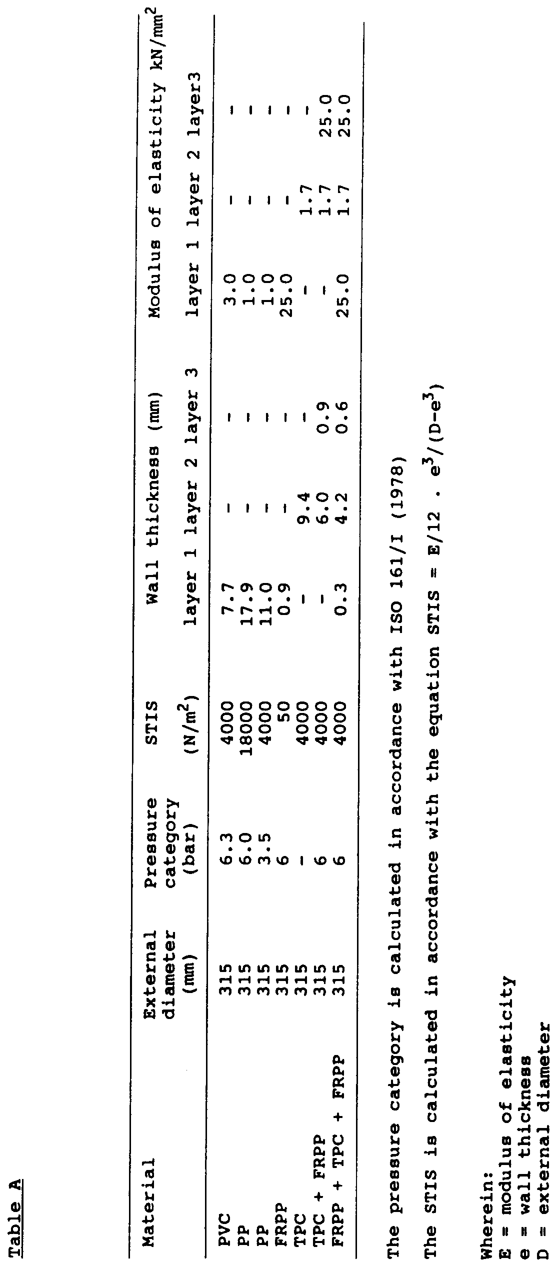

## Claims

1. Plastic pipe (1) comprising a wall of a plastic-filler layer (2) having a filler (3) content and being covered at least on one side by a fibre-reinforced plastic layer (10), in which the plastic of the filler layer (2) and of the fibre-reinforced layer (10) consists of a thermoplastic, characterized in that the plastic-filler layer (2) consists to at least 60 to 95 % by weight of filler.

2. Plastic pipe according to Claim 1, characterized in that the plastic of the filler layer (3) and of the fibre-reinforced plastic layer (10) consists of a polyolefin.

3. Plastic pipe according to Claim 2, characterized in that the plastic of the filler layer (3) and of the fibre-reinforced plastic layer (10) consists of a polypropylene, preferably a polypropylene copolymer.

4. Plastic pipe according to one or more of the preceding claims, characterized in that the fibre-reinforced plastic layer (10) is formed by winding a fibre-reinforced plastic tape (7), preferably said fibre-reinforcement extending in the longitudinal direction of the plastic tape.

5. Plastic pipe according to Claim 4, characterized in that the fibre reinforcement is continuous, preferably in the form of a continuous glass fibre.

6. Plastic pipe according to one or more of the preceding claims, characterized in that the plastic tape is wound essentially tangentially.

7. Plastic pipe according to one or more of the preceding claims, characterized in that the filler is an inorganic filler.

8. Plastic pipe according to one or more of the preceding claims, characterized in that at least 75-90% of the plastic-filler layer (2) consists of an inorganic filler.

9. Plastic pipe according to one or more of the preceding claims, characterized in that at least one reinforcing tape (5') extending axially is incorporated in the wall, preferably said axial reinforcement consisting of a plastic tape with reinforcing fibres extending in the axial direction of the pipe.

10. Plastic pipe according to one or more of the preceding claims, characterized in that the plastic-filler layer (2) of the pipe is formed to a pipe by shaping a sheet or thin web (11) of plastic containing filler and welding together the edge sections of the shaped sheet or web with the formation of a weld joint (9), preferably said sheet or thin web (11) being formed by casting or extruding.

11. Plastic pipe according to one or more of the preceding claims, characterized in that a plastic-filler layer (2) of the pipe is formed by winding a thin web (11) of plastic containing filler and preferably the layers of sheet or web (11) formed during winding are joined together by melting the plastic.

12. Plastic pipe according to Claims 10 or 11, characterized in that the shaping of the sheet or web (11) takes place at a temperature within the softening range of the plastic used.

## Patentansprüche

1. Kunststoffrohr (1) mit einer Wand aus einer Kunststoff/Füllstoff-Schicht (2), die einen Gehalt an Füllstoff (3) besitzt und zumindest auf einer Seite von einer faserverstärkten Kunststoffschicht (10) abgedeckt ist, wobei der Kunststoff der Füllstoffschicht (2) und der faserverstärkten Schicht (10) aus einem Thermoplast besteht, dadurch gekennzeichnet, daß die Kunststoff/Füllstoff-Schicht (2) aus zumindest 60 bis 95 Gew.% Füllstoff besteht.

2. Kunststoffrohr nach Anspruch 1, dadurch gekennzeichnet, daß der Kunststoff der Füllstoffschicht (3) und der faserverstärkten Kunststoffschicht (10) aus einem Polyolefin besteht.

3. Kunststoffrohr nach Anspruch 2, dadurch gekennzeichnet, daß der Kunststoff der Füllstoffschicht (3) und der faserverstärkten Kunststoffschicht (10) aus einem Polypropylen, vorzugsweise einem Polypropylencopolymer, besteht.

4. Kunststoffrohr nach einem oder mehreren der vorhergehenden Ansprüche, dadurch gekennzeichnet, daß die faserverstärkte Kunststoffschicht (10) durch Wickeln eines faserverstärkten Kunststoffbandes (7) gebildet ist, wobei die Faserverstärkung vorzugsweise in Längsrichtung des Kunststoffbandes verläuft.

5. Kunststoffrohr nach Anspruch 4, dadurch gekennzeichnet, daß die Faserverstärkung durchlaufend ist, vorzugsweise in Form einer durchlaufenden Glasfaser.

6. Kunststoffrohr nach einem oder mehreren der vorhergehenden Ansprüche, dadurch gekennzeichnet, daß das Kunststoffband im wesentlichen tangential gewickelt ist.

7. Kunststoffrohr nach einem oder mehreren der vorhergehenden Ansprüche, dadurch gekennzeichnet, daß der Kunststoff ein anorganischer Füllstoff ist.

8. Kunststoffrohr nach einem oder mehreren der vorhergehenden Ansprüche, dadurch gekennzeichnet, daß zumindest 75 bis 90% der Kunststoff/Füllstoff-Schicht (2) aus einem anorganischen Füllstoff besteht.

9. Kunststoffrohr nach einem oder mehreren der vorhergehenden Ansprüche, dadurch gekennzeichnet, daß zumindest ein axial verlaufendes Verstärkungsband (5') in die Wand einbezogen ist, wobei die axiale Verstärkung vorzugsweise aus einem Kunststoffband mit in Axialrichtung des Rohres verlaufenden Verstärkungsfasern besteht.

10. Kunststoffrohr nach einem oder mehreren der vorhergehenden Ansprüche, dadurch gekennzeichnet, daß die Kunststoff/Füllstoff-Schicht (2) des Rohrs dadurch zu einem Rohr geformt ist, daß ein Flachmaterial bzw. eine dünne Bahn (11) aus Kunststoff, den Füllstoff enthaltend, geformt ist und die Randabschnitte des geformten Flachmaterials bzw. der geformten Bahn unter Bildung einer Schweißverbindung (9) miteinander verschweißt sind, wobei vorzugsweise das Flachmaterial bzw. die dünne Bahn (11) durch Gießen oder Extrudieren gebildet ist.

11. Kunststoffrohr nach einem oder mehreren der vorhergehenden Ansprüche, dadurch gekennzeichnet, daß eine Kunststoff/Füllstoff-Schicht (2) des Rohres durch Wickeln einer dünnen Bahn (11) aus einem füllstoffenthaltenden Kunststoff gebildet ist und vorzugsweise die während des Wickelns gebildeten Schichten des Flachmaterials bzw. der Bahn (11) miteinander durch Schmelzen des Kunststoffes verbunden sind.

12. Kunststoffrohr nach Anspruch 10 oder 11, dadurch gekennzeichnet, daß das Formen des Flachmaterials bzw. der Bahn (11) bei einer Temperatur innerhalb des Erweichungsbereichs des verwendeten Kunststoffes stattfindet.

## Revendications

1. Tuyau en matière plastique (1) comprenant une paroi faite d'une couche de charge en matière plastique (2) contenant une charge (3) et recouverte d'un côté au moins par une couche de matière plastique renforcée de fibres (10), dans lequel la matière plastique de la couche de charge (2) et de la couche renforcée de fibres (10) consiste en une matière thermoplastique, caractérisé en ce que la couche de charge en matière plastique (2) se compose d'au moins 60 à 95% en poids de charge.

2. Tuyau en matière plastique selon la revendication 1, caractérisé en ce que la matière plastique de la couche de charge (2) et de la couche de matière plastique renforcée de fibres (10) consiste en une polyoléfine.

3. Tuyau en matière plastique selon la revendication 2, caractérisé en ce que la matière plastique de la couche de charge (2) et de la couche de matière plastique renforcée de fibres (10) consiste en un polypropylène, de préférence en un copolymère de polypropylène.

4. Tuyau en matière plastique selon l'une au moins des revendications précédentes, caractérisé en ce que la couche de matière plastique renforcée de fibres (10) est formée par enroulement d'une bande de matière plastique renforcée de fibres (7), ledit renforcement de fibres s'étendant de préférence dans le sens de la longueur de la bande de matière plastique.

5. Tuyau en matière plastique selon la revendication 4, caractérisé en ce que le renforcement de fibres est continu, et se présente de préférence sous la forme de fibres de verre continues.

6. Tuyau en matière plastique selon l'une au moins des revendications précédentes, caractérisé en ce que la bande de matière plastique est enroulée essentiellement tangentiellement.

7. Tuyau en matière plastique selon l'une au moins des revendications précédentes, caractérisé en ce que la charge est une charge minérale.

8. Tuyau en matière plastique selon l'une au moins des revendications précédentes, caractérisé en ce que 75 à 90% au moins de la couche de charge en matière plastique (2) consistent en une charge minérale.

9. Tuyau en matière plastique selon l'une au moins des revendications précédentes, caractérisé en ce qu'au moins une bande de renforcement (5') s'étendant axialement est incorporée dans la paroi, ledit renforcement axial consistant de préférence en une bande de matière plastique comportant des fibres de renforcement qui s'étendent dans la direction axiale du tuyau.

10. Tuyau en matière plastique selon l'une au moins des revendications précédentes, caractérisé en ce que la couche de charge en matière plastique (2) du tuyau est réalisée sous la forme d'un tuyau par mise en forme d'une feuille ou d'une nappe mince (11) en matière plastique contenant une charge et par soudage des parties de bord de la feuille ou de la nappe mise en forme grâce à la formation d'un joint de soudure (9), ladite feuille ou ladite nappe mince (11) étant de préférence formée par coulée ou extrusion.

11. Tuyau en matière plastique selon l'une au moins des revendications précédentes, caractérisé en ce qu'une couche de charge en matière plastique (2) du tuyau est formée par enroulement d'une nappe mince (11) en matière plastique contenant une charge, les couches de la feuille ou de la nappe (11) formées au cours de l'enroulement étant de préférence reliées les unes aux autres par fusion de la matière plastique.

12. Tuyau en matière plastique selon la revendication 10 ou 11, caractérisé en ce que la mise en forme de la feuille ou de la nappe (11) a lieu à une température qui se situe à l'intérieur de la plage de températures de ramollissement de la matière plastique utilisée.
